(19) Europäisches Patentamt
European Patent Office
Office européen des brevets

(11) **EP 1 593 929 B1**

(12) **FASCICULE DE BREVET EUROPEEN**

(45) Date de publication et mention
de la délivrance du brevet:
**12.12.2018 Bulletin 2018/50**

(51) Int Cl.:
***G01B 11/06*** *(2006.01)* ***G01J 5/00*** *(2006.01)*

(21) Numéro de dépôt: **05447097.6**

(22) Date de dépôt: **29.04.2005**

(54) **Procédé pour la mesure simultanée de l'épaisseur et de la température d'une couche d'oxyde**

Verfahren für die gleichzeitige Messung der Dicke und der Temperatur von einer Oxydschicht

Method for the simultaneous measurement of thickness and temperature of an oxyde layer

(84) Etats contractants désignés:
**AT BE BG CH CY CZ DE DK EE ES FI FR GB GR HU IE IS IT LI LT LU MC NL PL PT RO SE SI SK TR**

(30) Priorité: **03.05.2004 BE 200400220**

(43) Date de publication de la demande:
**09.11.2005 Bulletin 2005/45**

(73) Titulaire: **CENTRE DE RECHERCHES METALLURGIQUES asbl - CENTRUM VOOR RESEARCH IN DE METALLURGIE vzw 1000 Bruxelles (BE)**

(72) Inventeurs:
• **Franssen, Roger**
**4850 Montzen (Plombières) (BE)**
• **Schyns, Marc**
**4690 Roclenge-sur-Geer (BE)**
• **Bordignon, Michel**
**4140 Sprimont (BE)**

(74) Mandataire: **Pronovem**
**Office Van Malderen**
**Parc d'affaires Zénobe Gramme- bâtiment K**
**Square des Conduites d'Eau 1-2**
**4020 Liège (BE)**

(56) Documents cités:
**US-A- 5 326 173      US-A- 5 564 830
US-A- 5 841 110      US-A1- 2002 192 847
US-A1- 2003 176 000**

• **PATENT ABSTRACTS OF JAPAN vol. 1998, no. 13, 30 novembre 1998 (1998-11-30) & JP 10 206125 A (NIPPON STEEL CORP), 7 août 1998 (1998-08-07)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

<br>

**EP 1 593 929 B1**

**Description**

**Objet de l'invention**

La présente invention se rapporte à un procédé pour la mesure simultanée de la température et de l'épaisseur d'une couche d'oxyde déposée sur un substrat en mouvement à grande vitesse, de préférence une bande métallique chaude destinée à un traitement de galvanisation au trempé à chaud.

**Arrière-plan technologique et état de la technique**

L'oxydation contrôlée d'une bande d'acier suivie par la réduction de la couche d'oxyde peut sensiblement améliorer la mouillabilité des aciers à haute résistance pendant la galvanisation au trempé à chaud.

L'étape d'oxydation peut être réalisée dans un four de chauffe tel que, par exemple, un four à flamme directe (*Direct Flame Furnace,* DFF), en modifiant le rapport des teneurs en air et gaz. Plusieurs expériences ont montré qu'une couche d'environ 150 à 250 nm d'épaisseur est optimale pour améliorer la mouillabilité de la bande d'acier.

Pour contrôler la croissance de la couche d'oxyde, il est nécessaire d'utiliser un capteur de mesure de l'épaisseur monté près de la sortie du four DFF.

Par ailleurs, la température de la bande à la sortie du four de chauffe doit également être contrôlée. Les méthodes courantes de mesure de température pour les produits en mouvement sont basées sur la pyrométrie de rayonnement.

Lorsqu'on utilise des pyromètres monochromatiques, il est nécessaire de connaître l'émissivité du produit. Pour rappel, l'émissivité d'un corps réel est le rapport de l'émittance spectrale de ce corps réel à celle du corps noir. L'émittance spectrale est la densité spectrale de puissance rayonnée dans un hémisphère, à une longueur d'onde donnée, par unité de surface de l'émetteur. La loi de Planck donne l'émittance spectrale d'une source qui est le corps noir en fonction de la longueur d'onde et la température absolue. L'émissivité, inférieure à un pour un corps réel, dépend en particulier de la nature et de l'état de surface du corps. L'incertitude sur les valeurs de l'émissivité est l'une des principales sources d'erreur potentielles en pyrométrie optique.

Ainsi, malheureusement, l'émissivité d'une bande d'acier oxydée est fortement influencée par l'épaisseur de la couche d'oxyde à la surface de ladite bande. Donc, les mesures effectuées avec ce type de pyromètre sont affectées d'erreurs importantes. L'utilisation de pyromètres à double longueur d'onde, ou bichromatiques, n'améliore pas la précision des mesures. Même si l'émissivité du produit ne doit pas être connue dans le cas de ces pyromètres, le rapport des émissivités aux deux longueurs d'onde doit quant à lui être connu et une erreur dans l'estimation de ce rapport affecte également fortement la précision de la mesure de température. Il importe donc de connaître avec précision l'épaisseur de la couche d'oxyde ainsi que la loi de calibration reliant l'émissivité à l'épaisseur.

L'état de la technique suivant était connu au moment où la présente invention a été réalisée.

Le document JP-A-10 206125 propose un appareil simple pour déterminer, de manière non-destructive et sans contact, l'épaisseur d'une couche d'oxyde générée à la surface d'une bande d'acier lors du laminage à chaud. Cet appareil comprend un spectroradiomètre infrarouge permettant de mesurer le facteur de réflexion de la bande. L'épaisseur de la couche d'oxyde est ensuite calculée sur base de la relation existant entre le facteur de réflexion spectrale et l'épaisseur de la couche. Le facteur de réflexion (en anglais, *réflectance*) est le rapport entre le flux réfléchi et le flux incident pour un rayonnement donné.

De manière similaire, le document JP-A-4 013910 propose un appareil pour la mesure automatique et précise de l'épaisseur d'un film d'oxyde sur une bande d'acier à partir du facteur de réflexion de la bande, en utilisant une source de rayonnement infrarouge plane sise au-dessus de la bande et un détecteur matriciel à deux dimensions.

Par ailleurs, le document JP-A-11 325839 propose un dispositif pour mesurer avec précision l'épaisseur d'un film d'oxyde formé à la surface d'une bande d'acier défilant à grande vitesse, en utilisant la relation existant entre l'émissivité de la surface et l'épaisseur du film d'oxyde. A cette fin, le rayonnement de la bande est capté par un pyromètre bichromatique, utilisant une première longueur d'onde (2,5 à 10 μm) et une seconde longueur d'onde (10 à 20 μm). Un équipement de calcul permet d'obtenir la relation entre l'épaisseur du film d'oxyde et les émissivités mesurées à ces deux longueurs d'onde. La température de la bande est en outre mesurée par un thermomètre de contact, situé dans le champ visuel du pyromètre.

Le document JP-A-3 293504 divulgue un appareil permettant de recevoir et traiter deux émissivités et une température d'un objet cible. Pour ce faire, on utilise un pyromètre bichromatique et un dispositif procédant à l'acquisition simultanée des deux émissivités obtenues à partir des deux émittances fournies par le pyromètre et de la température. L'épaisseur du film d'oxyde est ensuite déterminée et affichée à partir de ces valeurs dans un calculateur.

Dans le document « Real time, in situ measurement of film thickness with Reflexion Supported Pyrometric Interferometry (RSPI) », F.G. Boebel et al., IEEE/SEMI Advanced Semiconductor Manufacturing Conference (1994), p.311-315, on divulgue l'évaluation *in situ* et simultanée de l'épaisseur de couche et de température avec une instrumentation optique et pyrométrique, dans le cas du contrôle de dépôts de couches minces dans la fabrication de composants électroniques. L'épaisseur de couche est déterminée au cours de sa croissance seulement par des mesures réflectométriques d'intensité normalisées. Les épaisseurs en fonction du temps sont déterminées au moyen d'algorithmes d'ajustement non linéaires.

**Buts de l'invention**

La présente invention vise à fournir une solution au problème technique posé qui s'affranchisse des inconvénients de l'état de l'art antérieur connu.

L'invention a pour but de proposer un procédé permettant le contrôle de l'épaisseur et de la température d'une couche d'oxyde déposée sur une bande d'acier en mouvement à grande vitesse, en vue d'améliorer sa mouillabilité dans une étape ultérieure de galvanisation au trempé à chaud.

L'invention a plus précisément pour but de proposer un procédé basé sur des mesures simultanées du facteur de réflexion spectrale et du rayonnement thermique.

L'invention a également pour but de déterminer l'épaisseur de la couche d'oxyde ainsi que la température du produit, à partir des mesures obtenues.

**Principaux éléments caractéristiques de l'invention**

un premier objet de la présente invention se rapporte à un procédé pour la mesure sans contact, simultanée et en temps réel de l'épaisseur (e) et la température (T) d'une couche d'oxyde déposée sur un substrat métallique, de préférence une bande d'acier en mouvement destinée à un traitement ultérieur de galvanisation au trempé à chaud.

Ce procédé utilise une installation comprenant une source de lumière présentant un spectre essentiellement continu s'étendant au moins depuis une longueur d'onde inférieure ($\lambda_1$) à une longueur d'onde supérieure ($\lambda_2$) et formant, par l'intermédiaire d'un premier moyen optique, de préférence une lentille, une petite tache lumineuse à la surface du substrat, un obturateur positionné entre la source de lumière et le substrat, un second moyen optique, de préférence une lentille, formant l'image de la surface de ladite tache sur la fente d'entrée d'un spectromètre optique dont la gamme de longueurs d'onde s'étend également de la longueur d'onde inférieure ($\lambda_1$) à la longueur d'onde supérieure ($\lambda_2$).

Selon le procédé de l'invention, l'épaisseur (e) de ladite couche d'oxyde est déterminée à partir de l'analyse du spectre de facteur de réflexion R($\lambda$) et la température (T) est déterminée simultanément à partir de S1($\lambda$) et de l'épaisseur (e), où :

- R($\lambda$) est le spectre de rayonnement réfléchi sur le substrat revêtu S3($\lambda$) divisé par le spectre de rayonnement incident S0($\lambda$) de la source de lumière, où S3($\lambda$) est lui-même obtenu en soustrayant le spectre S1($\lambda$) du spectre S2($\lambda$) ;
- S1($\lambda$) est le spectre de rayonnement intrinsèque du substrat revêtu, mesuré dans une première étape au moyen dudit spectromètre, fonctionnant en l'occurrence en mode pyromètre, en fermant l'obturateur dans le chemin optique ;
- S2($\lambda$) est le spectre du substrat revêtu mesuré dans une seconde étape au moyen dudit spectromètre, fonctionnant en l'occurrence en mode pyromètre et réflexion, en laissant ledit obturateur ouvert.

Toujours selon l'invention, on détermine l'épaisseur (e) de la couche d'oxyde à partir de l'analyse du spectre de facteur de réflexion R($\lambda$) de la manière suivante :

- si le spectre de facteur de réflexion R($\lambda$), dans la gamme opérationnelle du spectromètre, c'est-à-dire ($\lambda_1$, $\lambda_2$), présente au moins un pic d'interférence détectable, que ce soit un maximum ou un minimum, l'épaisseur de la couche d'oxyde est déduite de la longueur d'onde de ces pics minima ($\lambda_{1m}$, $\lambda_{2m}$, ...) ou maxima ($\lambda_{1M}$, $\lambda_{2M}$, ...) à partir des propriétés optiques, de préférence l'indice de réfraction complexe, de la couche d'oxyde et du substrat, l'épaisseur de la couche d'oxyde étant comprise entre deux valeurs $e_1$ et $e_2$ ;
- si aucun pic n'est détectable dans l'intervalle spectral précité ($\lambda_1$, $\lambda_2$), on en déduit que la couche est soit trop mince, c'est-à-dire a une épaisseur < $e_1$, soit trop épaisse, c'est-à-dire a une épaisseur > $e_2$, pour avoir des pics d'interférence apparaissant dans l'intervalle spectral considéré, l'atténuation de l'illumination dans la couche étant telle, lorsque cette couche est trop épaisse, qu'aucune interférence significative ne se produit, et on procède à la discrimination entre les deux cas en se basant sur la forme et l'intensité du signal de facteur de réflexion ; de préférence, on compare l'intensité du signal de facteur de réflexion [R($\lambda_3$)], prise à une troisième longueur d'onde donnée ($\lambda_3$), égale à ou proche de la longueur d'onde supérieure ($\lambda_2$), à un niveau d'intensité de référence prédéterminé obtenu par calibration ($R_{ref}$) ; dans le cas où le signal de facteur de réflexion est plus petit que ce niveau prédéterminé [R($\lambda_3$) < $R_{ref}$], on constate alors qu'une couche d'oxyde très épaisse, c'est-à-dire d'épaisseur supérieure à la valeur maximale $e_2$ est formée ; dans le cas contraire, on constate qu'il s'agit d'une couche d'oxyde très mince, c'est-à-dire d'épaisseur inférieure à la valeur minimale $e_1$ ;

- toujours dans ce cas de figure où la couche d'oxyde est dite très épaisse ou très mince, le traitement complémentaire suivant est requis :

  - pour la couche très mince, la valeur de l'épaisseur de la couche d'oxyde est déterminée à partir de la forme, de préférence la pente, de la courbe du facteur de réflexion spectrale R($\lambda$) ;
  - pour la couche très épaisse, aucune valeur d'épaisseur n'est obtenue à partir des mesures du facteur de réflexion spectrale.

Selon une modalité de réalisation préférée de l'invention, si le spectre de facteur de réflexion R($\lambda$), dans la gamme opérationnelle du spectromètre, c'est-à-dire ($\lambda_1$, $\lambda_2$), présente au moins un pic détectable, on calcule l'épaisseur (e) de la couche d'oxyde par la formule suivante :

$$e = k.\lambda_e/4n,$$

où k est l'ordre d'apparition des pics dans le cas d'une croissance progressive de la couche d'oxyde (k=1 : 1er minimum, k=2 : 1er maximum ; k=3 : 2ème minimum, etc.), $\lambda_e$ est la longueur d'onde du pic considéré et n est l'indice de réfraction.
Avantageusement, lorsqu'il y a plusieurs extrema, l'épaisseur (e) est le résultat du calcul de la moyenne arithmétique des épaisseurs obtenues par l'expression précitée.
Toujours selon une modalité préférée de mise en oeuvre de l'invention, dans le cas où la couche d'oxyde est très mince, l'épaisseur (e) est estimée par une équation du type :

$$e = a_0 + a_1.\ln(Sl_1),$$

où $a_0$ et $a_1$ sont des constantes , ou encore du type :

$$e = a'_0 + a'_1.Sl_1 + a'_2.(Sl_1)^2,$$

où $a'_0$, $a'_1$ et $a'_2$ sont des constantes, $Sl_1$ désignant une pente normalisée obtenue par la formule :

$$Sl_1 = [R(\lambda_a)-R(\lambda_b)] / [R(\lambda_a)+R(\lambda_b)],$$

où le facteur de réflexion est mesuré à deux longueurs d'onde distinctes $\lambda_a$ et $\lambda_b$ judicieusement choisies expérimentalement.
Toujours dans le cadre de la présente invention, on mesure et détermine essentiellement simultanément la température (T) de la couche d'oxyde en utilisant la méthode de pyrométrie monochromatique, à une longueur d'onde aussi courte que possible ($\lambda_4$), de préférence égale à ou proche de la longueur d'onde inférieure ($\lambda_1$), en combinaison avec l'une des méthodes suivantes, selon la valeur de l'épaisseur (e) de la couche d'oxyde :

- si l'épaisseur (e) est plus petite qu'une valeur inférieure d'épaisseur ($e_3$), l'émissivité de la couche d'oxyde est estimée par une équation du type :

$$\varepsilon_{\lambda 4} = b_0 + b_1.e + b_2.e^2,$$

où $b_0$, $b_1$ et $b_2$ sont des constantes ;
- si l'épaisseur (e) est supérieure à ladite valeur inférieure ($e_3$) mais inférieure à une valeur supérieure d'épaisseur ($e_4$ ; $e_3 < e_4$), l'émissivité de la couche d'oxyde est à nouveau estimée par une équation du type :

$$\varepsilon_{\lambda 4} = c_0 + c_1.e + c_2.e^2,$$

où $c_0$, $c_1$ et $c_2$ sont des constantes ;
- si l'épaisseur (e) est supérieure à ladite valeur supérieure ($e_4$), l'émissivité est estimée par

$$\varepsilon_{\lambda_4} = d_0,$$

$d_0$ étant une constante, et les bornes d'épaisseur précitées ($e_3$ et $e_4$) étant choisies pour que $e_3$ corresponde au premier maximum de l'émissivité à la longueur d'onde $\lambda_4$ et $e_4$ corresponde approximativement au premier passage par la valeur $d_0$ suivant le maximum de la courbe d'émissivité ($e_4 > e_3$).

De préférence, le substrat métallique est une bande d'acier en mouvement, subissant une oxydation contrôlée, de préférence dans un four de chauffe, suivie d'une réduction de la couche d'oxyde formée.

Un exemple de la mise en oeuvre du procédé de la présente invention se rapporte à une installation pour la mise en oeuvre du procédé de mesure décrit ci-dessus. Cette installation comprend une source de lumière présentant un spectre essentiellement continu s'étendant au moins depuis une longueur d'onde inférieure ($\lambda_1$) à une longueur d'onde supérieure ($\lambda_2$) et formant, par l'intermédiaire d'une lentille, une petite tache lumineuse à la surface du substrat, un obturateur positionné entre la source de lumière et le substrat, une seconde lentille formant l'image de la surface de ladite tache sur la fente d'entrée d'un spectromètre optique dont la gamme de longueurs d'onde s'étend au moins de la longueur d'onde inférieure ($\lambda_1$) à la longueur d'onde supérieure ($\lambda_2$).

Avantageusement, l'installation est conformée pour qu'une seule lentille puisse être utilisée tant pour l'éclairage que pour la mesure et soit placée le long d'un axe sensiblement orthogonal à la surface du substrat.

De préférence, la gamme opérationnelle de longueurs d'onde ($\lambda_1$, $\lambda_2$) du spectromètre est comprise dans l'intervalle de 200 à 2500 nm.

Selon une première modalité d'exécution préférée, le spectromètre est utilisable comme appareil de mesure du facteur de réflexion spectrale dans la gamme de longueurs d'onde précitée ($\lambda_1$, $\lambda_2$).

Selon une deuxième modalité d'exécution préférée, le spectromètre est utilisable comme pyromètre monochromatique dans la gamme de longueurs d'onde précitée ($\lambda_1$, $\lambda_2$), se basant sur le spectre de rayonnement intrinsèque du substrat revêtu.

De manière particulièrement avantageuse, l'installation de l'invention comprend une unité de calcul et d'affichage simultané des valeurs de température et d'épaisseur de la couche d'oxyde.

Encore avantageusement, sans exclure un positionnement beaucoup plus proche du produit (par exemple 10-25 cm), l'installation peut être disposée à au moins 1 mètre de la surface du substrat. Cette caractéristique résulte du fait que tant l'éclairage que la détection du signal réfléchi par le substrat revêtu sont réalisés selon un cône d'angle très faible. Ainsi, l'installation de l'invention se distingue des dispositifs existants utilisant des angles plus grands, tels que ceux travaillant en éclairage ou réflexion hémisphérique, qui doivent être positionnés typiquement à distance du substrat inférieure à une dizaine de centimètres.

L'avantage de l'installation sera alors de pouvoir utiliser des emplacements déjà prévus pour les pyromètres optiques tout en évitant les problèmes habituels d'encombrement, de refroidissement, etc.

## Brève description des figures

La figure 1 représente un exemple de spectre du facteur de réflexion en fonction de la longueur d'onde, $R(\lambda)$, obtenu selon le procédé de la présente invention, pour différentes épaisseurs de la couche d'oxyde formée sur le substrat.
La figure 2 représente un ordinogramme caractéristique du procédé de mesure de l'épaisseur de la couche d'oxyde, selon la présente invention.
La figure 3 représente un ordinogramme caractéristique du procédé de mesure de la température, selon la présente invention.
La figure 4 représente schématiquement l'installation pour la mise en oeuvre du procédé de l'invention.

## Description d'une forme d'exécution préférée de l'invention

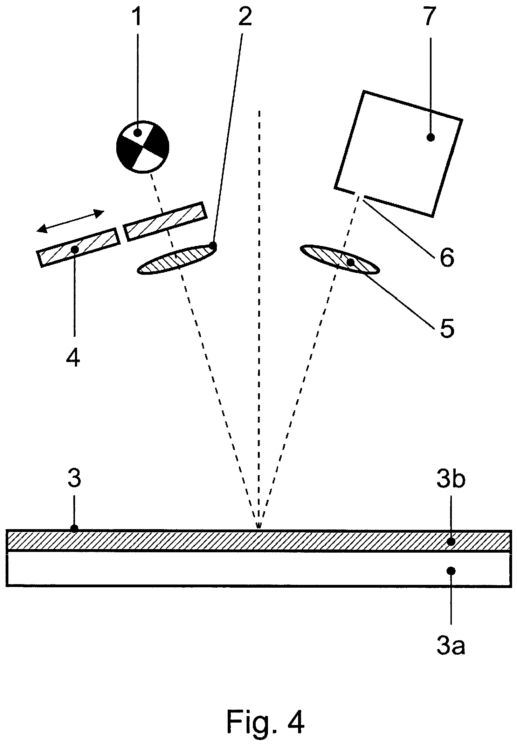

L'installation pour la mise en oeuvre de l'invention, illustré schématiquement sur la figure 4, comprend une source de lumière, telle qu'une lampe 1, formant, grâce à l'utilisation d'une lentille 2, une petite tache lumineuse à la surface du produit 3, constitué d'un substrat 3a recouvert d'une couche d'oxyde 3b. Un obturateur 4 est de plus positionné entre la source de lumière 1 et le produit 3. La source de lumière doit couvrir une étendue spectrale correspondant au moins à la gamme de longueurs d'onde du spectromètre définie ci-après (allant de l'UV à l'IR).

Une seconde lentille 5 forme l'image de la surface de ladite tache lumineuse sur la fente d'entrée 6 d'un spectromètre optique 7 dont la gamme de longueurs d'onde s'étend de $\lambda_1$ à $\lambda_2$.

Dans une forme d'exécution préférée, une seule lentille sera utilisée aussi bien pour l'éclairage que pour la mesure et sera placée le long d'un axe orthogonal à la surface du produit, en utilisant des techniques connues telles que, par exemple, des guides de lumière ramifiés.

Les mesures sont effectuées selon deux étapes principales :

- d'abord, le spectre de rayonnement intrinsèque du produit est mesuré en fermant l'obturateur dans le chemin optique. Un premier spectre $S1(\lambda)$ est alors enregistré au moyen dudit spectromètre ;
- dans une seconde étape, l'obturateur est ouvert et un second spectre $S2(\lambda)$ est enregistré.

Pour extraire le spectre $S3(\lambda)$ correspondant au signal réfléchi uniquement, le spectre de rayonnement $S1(\lambda)$ doit être soustrait du spectre $S2(\lambda)$. Par la suite, le spectre $R(\lambda)$ désignera le spectre de réflexion normalisé, c'est-à-dire rapporté au rayonnement incident sur la bande $S0(\lambda)$, encore appelé spectre du facteur de réflexion (*réflectance*). On a donc :

$$R(\lambda) = S3(\lambda)/S0(\lambda).$$

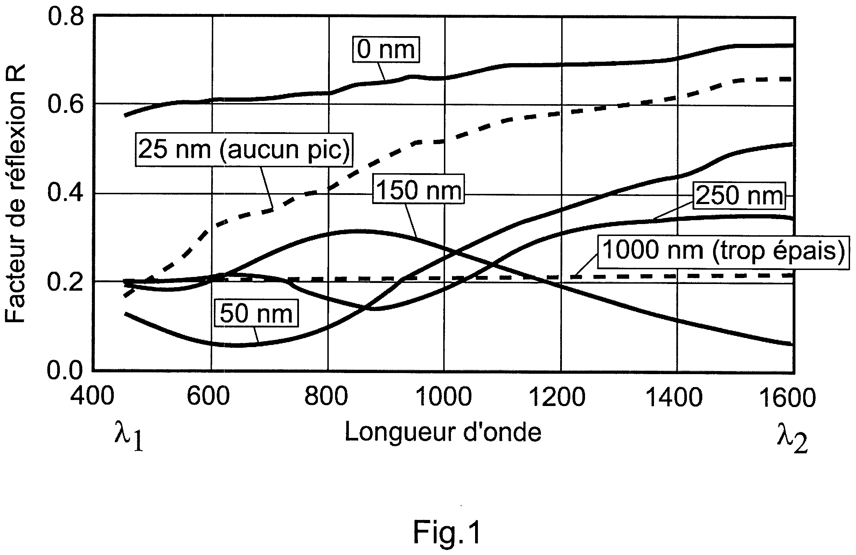

Des exemples de spectres $R(\lambda)$ sont illustrés à la figure 1.

*Mesure de l'épaisseur de la couche d'oxyde*

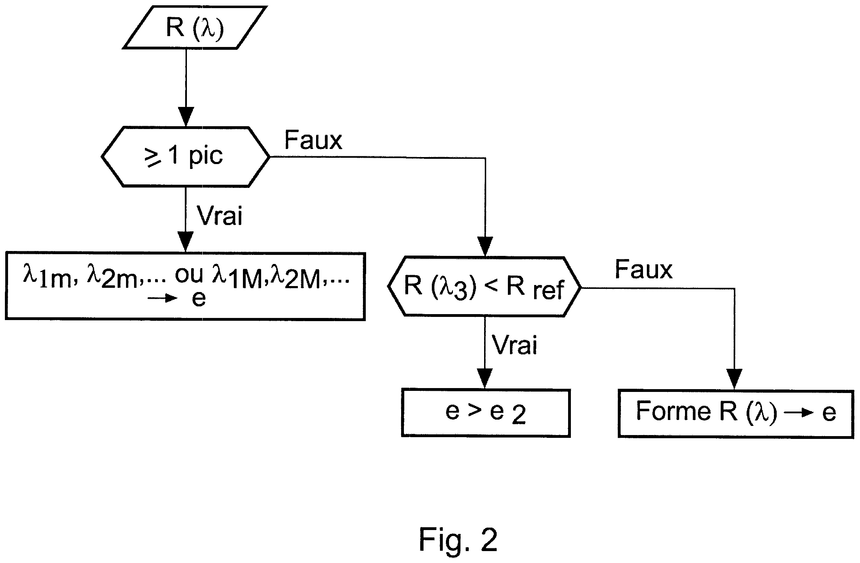

En analysant $R(\lambda)$, il est possible d'obtenir l'épaisseur de la couche d'oxyde. En effet, il est bien connu que lors de la mesure du facteur de réflexion spectrale d'une couche mince déposée sur un substrat, on peut observer une interférence entre une première réflexion à l'interface air/couche et une seconde réflexion à l'interface couche/substrat. La méthode de mesure selon l'invention utilise ce profil d'interférence spectrale pour calculer l'épaisseur de la couche d'oxyde, comme décrit ci-dessous. Il convient alors de prendre en considération trois cas pour le traitement du signal, comme représenté à la figure 2.

1. Présence d'au moins un pic dans le spectre du facteur de réflexion $R(\lambda)$

Si le spectre du facteur de réflexion $R(\lambda)$, dans la gamme du spectromètre ($\lambda_1$, $\lambda_2$), présente au moins un pic détectable (maximum ou minimum), selon la méthode générale de l'invention, l'épaisseur e de la couche d'oxyde peut être déduite de la longueur d'onde de ces pics (minima $\lambda_{1m}$, $\lambda_{2m}$, ..., ou maxima $\lambda_{1M}$, $\lambda_{2M}$, ...) si on connaît les propriétés optiques (indice de réfraction complexe) de la couche d'oxyde et du substrat (pour $e_1 < e < e_2$).

Les épaisseurs extrêmes $e_1$ et $e_2$ dépendent, pour la première, de la longueur d'onde $\lambda_1$ et, pour la seconde, du coefficient d'extinction de l'oxyde formé et peuvent être connues a priori par calibration.

Selon une modalité préférée de l'invention, l'épaisseur e est obtenue par la formule (simplifiée) :

$$e = k.\lambda_e/4n,$$

où k est l'ordre d'apparition des pics dans le cas d'une croissance progressive de la couche d'oxyde (k=1 : 1er minimum, k=2 : 1er maximum ; k=3 : 2ème minimum, etc.), $\lambda_e$ est la longueur d'onde du pic considéré et n est l'indice de réfraction.

Lorsqu'il y a plusieurs extrema, l'épaisseur est le résultat du calcul de la moyenne arithmétique des épaisseurs obtenues par l'expression ci-dessus.

La valeur de k est déterminée, selon une méthode bien connue de l'homme de métier, en fonction du nombre d'extrema et de leur distance sur l'échelle des longueurs d'onde.

Si aucun pic n'est détectable dans l'intervalle spectral ($\lambda_1$, $\lambda_2$), la couche est soit trop mince ($e < e_1$) ou trop épaisse ($e > e_2$) pour avoir des pics apparaissant dans l'intervalle spectral considéré. Dans ce dernier cas, l'atténuation de l'illumination dans la couche est telle qu'aucune interférence significative ne se produit.

Pour discriminer les deux cas, l'intensité et la forme du signal du facteur de réflexion seront analysées. Selon une méthode particulière de réalisation, l'intensité du facteur de réflexion à une longueur d'onde donnée $R(\lambda_3)$ ($\lambda_3$ égal à ou proche de $\lambda_2$) doit être comparée à un niveau de référence $R_{ref}$ obtenu par calibration. Si le signal du facteur de réflexion est plus petit que ce niveau prédéterminé, une couche d'oxyde très épaisse ($e > e_2$) est formée. Sinon, il s'agit d'une couche d'oxyde très mince ($e < e_1$). Un traitement complémentaire est alors requis.

2. Absence de pic - couche d'oxyde très mince $e < e_1$.

Selon la méthode générale de l'invention, dans le cas d'une couche très mince d'épaisseur inférieure à $e_1$,

l'épaisseur de la couche sera estimée à partir de la mesure de la forme de la courbe spectrale du facteur de réflexion.

Selon une modalité préférée, on calcule une pente normalisée par la formule :

$$Sl_1 = [R(\lambda_a) - R(\lambda_b)] / [R(\lambda_a) + R(\lambda_b)],$$

où le facteur de réflexion est mesuré à deux longueurs d'onde distinctes $\lambda_a$ et $\lambda_b$, judicieusement choisies expérimentalement.

L'épaisseur e est alors estimée par une équation du type :

$$e = a_0 + a_1.\ln(Sl_1),$$

où $a_0$ et $a_1$ sont des constantes, ou encore du type :

$$e = a'_0 + a'_1.Sl_1 + a'_2.(Sl_1)^2,$$

où $a'_0$, $a'_1$ et $a'_2$ sont des constantes.

3. Absence de pic - couche d'oxyde très épaisse $e > e_2$.

Dans le cas d'une couche trop épaisse, il n'est pas possible de déterminer son épaisseur à partir des mesures du facteur de réflexion spectrale.

*Mesure de la température*

La mesure de la température est basée sur la méthode de pyrométrie monochromatique. L'émissivité est estimée à partir de la mesure de l'épaisseur e de la couche d'oxyde. La longueur d'onde $\lambda_4$ est choisie aussi courte que possible ($\lambda_4$ égal à ou proche de $\lambda_1$) pour minimiser l'influence d'une erreur d'estimation de l'émissivité sur la mesure de la température, mais suffisamment élevée pour conserver un rapport signal/bruit suffisant pour être exploitable.

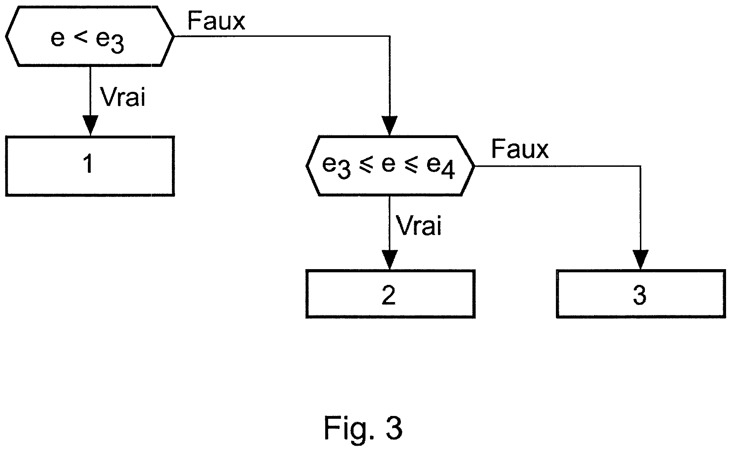

Différentes méthodes sont utilisées, comme représenté à la figure 3, selon l'épaisseur e de la couche d'oxyde, en vue précisément de minimiser les erreurs de mesure :

- si l'épaisseur e est plus petite que $e_3$, l'émissivité est estimée par une équation du type :

$$\varepsilon_{\lambda 4} = b_0 + b_1.e + b_2.e^2,$$

où $b_0$, $b_1$ et $b_2$ sont des constantes (traitement 1 à la figure 3) ;
- si l'épaisseur e est supérieure à $e_3$ mais inférieure à $e_4$ ($e_3 < e_4$), l'émissivité est à nouveau estimée par une équation du type :

$$\varepsilon_{\lambda 4} = c_0 + c_1.e + c_2.e^2,$$

où $c_0$, $c_1$ et $c_2$ sont des constantes (traitement 2 à la figure 3);
- si l'épaisseur e est supérieure à $e_4$, l'émissivité est estimée par :

$$\varepsilon_{\lambda 4} = d_0,$$

$d_0$ étant une constante (traitement 3 à la figure 3).

Les bornes $e_3$ et $e_4$ sont judicieusement choisies : $e_3$ correspond au premier maximum de l'émissivité à la longueur d'onde $\lambda_4$ choisie et $e_4$ correspond approximativement au premier passage par la valeur $d_0$ suivant le maximum de la courbe d'émissivité ($e_4 > e_3$).

7

<u>EXEMPLE</u>

Pour une couche d'oxyde FeO d'épaisseur 0-300 nm, on fixera les paramètres aux valeurs suivantes :

- Spectromètre : $\lambda_1$ = 450 nm, $\lambda_2$ = 1650 nm ;
- Mesure d'épaisseur : $R_{ref}$ = 2000 (valeur indicative, dépendant des paramètres du système), $\lambda_3$ = 1650 nm, $\lambda_a$ = 950 nm, $\lambda_b$ = 800 nm et n = 2,4 ;
- Mesure de température : $\lambda_4$ = 900 nm, $e_3$ = 80 nm et $e_4$ = 160 nm.

**Revendications**

1. Procédé pour la mesure sans contact, simultanée et en temps réel de l'épaisseur (e) et de la température (T) d'une couche d'oxyde déposée sur un substrat métallique, de préférence une bande d'acier en mouvement destinée à un traitement ultérieur de galvanisation au trempé à chaud, utilisant une installation comprenant une source de lumière (1) formant, par l'intermédiaire d'un premier moyen optique (2), de préférence une lentille, une petite tache lumineuse à la surface (3) du substrat, un obturateur (4) positionné entre la source de lumière et le substrat, un second moyen optique (5), de préférence une lentille, formant l'image de la surface de ladite tache sur la fente d'entrée (6) d'un spectromètre optique (7), la source de lumière (1) utilisée présentant un spectre essentiellement continu s'étendant au moins depuis une longueur d'onde inférieure ($\lambda_1$) à une longueur d'onde supérieure ($\lambda_2$), le spectromètre optique (7) ayant une gamme opérationnelle de longueurs d'onde ($\lambda_1$, $\lambda_2$) comprise entre 200nm et 2500nm et de préférence entre 450nm et 1650nm, comprenant les étapes successives suivantes :

   - dans une première étape, on ferme l'obturateur (4) dans le chemin optique et on mesure le spectre de rayonnement intrinsèque du substrat revêtu S1($\lambda$), au moyen dudit spectromètre (7) fonctionnant en l'occurrence en mode pyromètre ;
   - dans une seconde étape, on laisse l'obturateur (4) ouvert et on mesure le spectre du substrat revêtu S2($\lambda$) au moyen dudit spectromètre (7), fonctionnant en l'occurrence en mode pyromètre et réflexion ;
   - on détermine le spectre du facteur de réflexion R($\lambda$) défini comme le rapport du spectre de rayonnement réfléchi sur le substrat revêtu, S3($\lambda$), par le spectre de rayonnement incident S0($\lambda$) de la source de lumière (1), où S3($\lambda$) est lui-même obtenu en soustrayant le spectre S1($\lambda$) du spectre S2($\lambda$) ;
   - on détermine l'épaisseur (e) de ladite couche d'oxyde à partir de l'analyse du spectre du facteur de réflexion R de la manière suivante :

      - si le spectre du facteur de réflexion R($\lambda$), dans la gamme opérationnelle du spectromètre, c'est-à-dire ($\lambda_1$, $\lambda_2$), présente au moins un pic d'interférence détectable, que ce soit un maximum ou un minimum, l'épaisseur de la couche d'oxyde est déduite de la longueur d'onde de ces pics minima ($\lambda_{1m}$, $\lambda_{2m}$, ...) ou maxima ($\lambda_{1M}$, $\lambda_{2M}$, ...) à partir des propriétés optiques, de préférence l'indice de réfraction complexe, de la couche d'oxyde et du substrat, l'épaisseur de la couche d'oxyde étant comprise entre deux valeurs extrêmes $e_1$ et $e_2$, $e_1$ dépendant de $\lambda_1$ et $e_2$ dépendant du coefficient d'extinction de l'oxyde formé $e_1$ et $e_2$ étant déterminés a priori par calibration ;
      - si aucun pic n'est détectable dans l'intervalle spectral précité ($\lambda_1$, $\lambda_2$), on en déduit que la couche est soit trop mince, c'est-à-dire a une épaisseur < $e_1$, soit trop épaisse, c'est-à-dire a une épaisseur > $e_2$, pour avoir des pics d'interférence apparaissant dans l'intervalle spectral considéré, l'atténuation de l'illumination dans la couche étant telle, lorque cette couche est trop épaisse, qu'aucune interférence significative ne se produit, et on procède à la discrimination entre les deux cas en se basant sur la forme et l'intensité du signal de facteur de réflexion R($\lambda$) ;

      - toujours dans ce cas de figure où la couche d'oxyde est dite très épaisse ou très mince, le traitement complémentaire suivant est requis :

         pour la couche très mince, la valeur de l'épaisseur de la couche d'oxyde est déterminée à partir de la forme, de préférence la pente, de la courbe du facteur de réflexion spectrale R($\lambda$) ;
         pour la couche très épaisse, aucune valeur d'épaisseur n'est obtenue à partir des mesures du facteur de réflexion spectrale ;

      - on détermine la température (T) à partir de S1($\lambda$) et de l'épaisseur (e).

**2.** Procédé selon la revendication 1, **caractérisé en ce que**, si le spectre du facteur de réflexion R($\lambda$), dans la gamme opérationnelle du spectromètre, c'est-à-dire ($\lambda1$, $\lambda2$), présente au moins un pic détectable, on calcule l'épaisseur (e) de la couche d'oxyde par la formule suivante :

$$e = k.\lambda_e/4n,$$

où k est l'ordre d'apparition des pics dans le cas d'une croissance progressive de la couche d'oxyde (k=1 : 1er minimum, k=2 : 1er maximum ; k=3 : 2ème minimum, etc.), $\lambda_e$ est la longueur d'onde du pic considéré et n est l'indice de réfraction.

**3.** Procédé selon la revendication 2, **caractérisé en ce que**, lorsqu'il y a plusieurs extrema, l'épaisseur (e) est le résultat du calcul de la moyenne arithmétique des épaisseurs obtenues par l'expression précitée.

**4.** Procédé selon la revendication 1, **caractérisé en ce que**, dans le cas où aucun pic n'est détectable dans l'intervalle spectral précité ($\lambda1$, $\lambda2$), on compare l'intensité du signal de facteur de réflexion [R($\lambda3$)], prise à une troisième longueur d'onde donnée ($\lambda3$), égale à ou proche de la longueur d'onde supérieure ($\lambda2$), à un niveau d'intensité de référence prédéterminé obtenu par calibration (Rref) ; **en ce que**, dans le cas où le signal de facteur de réflexion est plus petit que ce niveau prédéterminé [R($\lambda3$) < Rref], on constate alors qu'une couche d'oxyde très épaisse, c'est-à-dire d'épaisseur supérieure à une valeur maximale (e2) est formée ; et **en ce que** dans le cas contraire, on constate qu'il s'agit d'une couche d'oxyde très mince, c'est-à-dire d'épaisseur inférieure à une valeur minimale (e1).

**5.** Procédé selon la revendication 1, **caractérisé en ce que**, dans le cas où la couche d'oxyde est très mince, l'épaisseur (e) est estimée par une équation du type :

$$e = a_0 + a_1.\ln(SI_1),$$

où $a_0$ et $a_1$ sont des constantes, ou encore du type :

$$e = a'_0 + a'_1.SI_1 + a'_2.(SI_1)^2,$$

où $a'_0$, $a'_1$ et $a'_2$ sont des constantes, $SI_1$ désignant une pente normalisée obtenue par la formule :

$$SI_1 = [R(\lambda_a)-R(\lambda_b)]/[R(\lambda_a)+R(\lambda_b)],$$

où le facteur de réflexion est mesuré à deux longueurs d'onde distinctes $\lambda_a$ et $\lambda_b$ judicieusement choisies expérimentalement.

**6.** Procédé selon l'une quelconque des revendications précédentes, **caractérisé en ce que** l'on mesure et détermine essentiellement simultanément la température (T) de la couche d'oxyde en utilisant la méthode de pyrométrie monochromatique, à une longueur d'onde aussi courte que possible ($\lambda_4$), égale à ou proche de la longueur d'onde inférieure ($\lambda_1$), en combinaison avec l'une des méthodes suivantes, selon la valeur de l'épaisseur (e) de la couche d'oxyde :

- si l'épaisseur (e) est plus petite qu'une valeur inférieure d'épaisseur ($e_3$), l'émissivité de la couche d'oxyde est estimée par une équation du type :

$$\varepsilon_{\lambda4} = b_0 + b_1.e + b_2.e^2,$$

où $b_0$, $b_1$ et $b_2$ sont des constantes ;
- si l'épaisseur (e) est supérieure à ladite valeur inférieure ($e_3$) mais inférieure à une valeur supérieure d'épaisseur ($e_4$ ; $e_3 < e_4$), l'émissivité de la couche d'oxyde est à nouveau estimée par une équation du type :

$$\varepsilon_{\lambda 4} = c_0 + c_1.e + c_2.e^2,$$

où $c_0$, $c_1$ et $c_2$ sont des constantes ;
- si l'épaisseur (e) est supérieure à ladite valeur supérieure ($e_4$), l'émissivité est estimée par

$$\varepsilon_{\lambda 4} = d_0,$$

$d_0$ étant une constante, et les bornes d'épaisseur précitées ($e_3$, $e_4$) étant choisies pour que $e_3$ corresponde au premier maximum de l'émissivité à la longueur d'onde $\lambda_4$ et $e_4$ corresponde approximativement au premier passage par la valeur $d_0$ suivant le maximum de la courbe d'émissivité ($e_4 > e_3$).

**7.** Procédé selon l'une quelconque des revendications précédentes, **caractérisé en ce que** le substrat métallique est une bande d'acier en mouvement subissant une oxydation contrôlée, de préférence dans un four de chauffe, suivie d'une réduction de la couche d'oxyde formée.

**Patentansprüche**

**1.** Verfahren zur kontaktlosen, gleichzeitigen Echtzeit-Messung der Dicke (e) und der Temperatur (T) einer Oxidschicht, die auf ein Metallsubstrat abgelagert ist, vorzugsweise ein sich bewegendes Stahlband, das einer zusätzlichen Feuerverzinkungsbehandlung zugeführt wird, unter Verwendung einer Einrichtung, umfassend eine Lichtquelle (1), die mittels eines ersten optischen Mittels (2), vorzugsweise einer Linse, einen kleinen Lichtfleck auf der Oberfläche (3) des Substrats bildet, einen Verschluss (4), der zwischen Lichtquelle und Substrat positioniert ist, ein zweites optisches Mittel (5), vorzugsweise eine Linse, die ein Bild der Oberfläche des Flecks auf dem Eintrittsspalt (6) eines optischen Spektrometers (7) bildet, wobei die verwendete Lichtquelle (1) ein im Wesentlichen durchgehendes Spektrum aufweist, das sich mindestens von einer kleineren Wellenlänge ($\lambda 1$) zu einer größeren Wellenlänge ($\lambda 2$) erstreckt, wobei der operative Wellenlängenbereich ($\lambda 1$, $\lambda 2$) des optischen Spektrometers (7) zwischen 200 und 2500 nm, vorzugsweise zwischen 450 und 1650 nm liegt, wobei das Verfahren die Schritte umfasst:

- in einem ersten Schritt: Schließen des Verschlusses (4) im Strahlengang und Messen des intrinsischen Strahlungsspektrums des beschichteten Substrats S1($\lambda$) mittels des Spektrometers (7), der in diesem Fall im Pyrometermodus funktioniert;
- in einem zweiten Schritt: Offenlassen des Verschlusses (4) und Messen des Spektrums des beschichteten Substrats S2($\lambda$) mittels des Spektrometers (7), der in diesem Fall im Pyrometer- und Reflexionsmodus funktioniert;
- Ermitteln des Spektrums des Reflexionsgrads R($\lambda$), definiert als Verhältnis des Strahlungsspektrums, das auf das beschichtete Substrat zurückgestrahlt wird, S3($\lambda$), zum Spektrum der einfallenden Strahlung S0($\lambda$) der Lichtquelle (1), wobei S3($\lambda$) selbst durch Abziehen des Spektrums S1($\lambda$) vom Spektrum S2($\lambda$) errechnet wird;
- Ermitteln der Dicke (e) der Oxidschicht anhand einer Spektrumsanalyse des Reflexionsgrads R wie folgt:

- wenn das Spektrum des Reflexionsgrads R($\lambda$) im operativen Bereich des Spektrometers, d.h. ($\lambda 1$, $\lambda 2$) mindestens eine erkennbare Interferenzspitze - gleichgültig, ob Maximum oder Minimum - aufweist, wird die Dicke der Oxidschicht anhand der optischen Eigenschaften, vorzugsweise des komplexen Brechungsindexes der Oxidschicht und des Substrats, von der Wellenlänge der Minimum- ($\lambda 1m$, $\lambda 2m$...) oder Maximumspitzen ($\lambda_{1M}$, $\lambda_{2M}$, ...), wobei die Dicke der Oxidschicht zwischen zwei Extremwerten $e_1$ und $e_2$, liegt, wobei $e_1$ von $\lambda_1$ abhängt und $e_2$ vom Extinktionskoeffizienten des ausgebildeten Oxids abhängt und $e_1$ und $e_2$ im Vorfeld durch Kalibrierung bestimmt werden;
- wenn im vorgenannten spektralen Bereich ($\lambda 1$, $\lambda 2$) keine Spitze erkennbar ist, wird daraus geschlossen, dass die Schicht entweder zu dünn ist, d.h. eine Dicke < $e_1$ aufweist, oder zu dick ist, d.h. eine Dicke > $e_2$ aufweist, als dass Interferenzspitzen im betrachteten spektralen Bereich erscheinen würden, wobei die Abschwächung der Beleuchtung in der Schicht derart ist, wenn diese zu dick ist, dass keine erheblichen Interferenzen erzeugt werden; zwischen diesen beiden Fällen wird anhand von Form und Intensität des Signals des Reflexionsgrads R($\lambda$) unterschieden;
- wobei bei einer Feststellung, dass die Oxidschicht sehr dick oder sehr dünn ist, folgende zusätzliche Behandlung erforderlich ist:

Bei der sehr dünnen Schicht wird der Dickewert der Oxidwert anhand der Form, vorzugsweise Gefälle, der Kurve des spektralen Reflexionsgrads R($\lambda$) ermittelt;

bei der sehr dicken schicht wird durch Messen des spektralen Reflexionsgrads kein Dickewert ermittelt;

- Ermitteln der Temperatur (T) anhand von S1 ($\lambda$) und der Dicke (e).

2. Verfahren nach Anspruch 1, **dadurch gekennzeichnet, dass**, wenn das Spektrum des Reflexionsgrads R($\lambda$) im operativen Bereich des Spektrometers ($\lambda1$, $\lambda2$) mindestens eine erkennbare Spitze aufweist, die Dicke (e) der Oxidschicht anhand folgender Formel errechnet wird:

$$e = k.\lambda e/4n,$$

wobei k die Reihenfolge der Spitzen im Falle eines allmählichen Anwachsens der Oxidschicht ist (k=1 : 1. Minimum , k=2 : 1. Maximum ; k=3 : 2. Minimum, usw.), $\lambda$e die Wellenlänge der jeweils betrachteten Spitze ist und n der Brechungsindex ist.

3. Verfahren nach Anspruch 2, **dadurch gekennzeichnet, dass** bei Vorhandensein mehrerer Extremwerte die Dicke (e) aus der Berechnung des arithmetischen Mittels der sich aus dem vorgenannten Ausdruck ergebenden Dicken ergibt.

4. Verfahren nach Anspruch 1, **dadurch gekennzeichnet, dass**, wenn im vorgenannten spektralen Bereich ($\lambda1$, $\lambda2$) keine Spitze erkennbar ist, die Signalstärke des Reflexionsgrads [R($\lambda3$)] bei einer zweiten bestimmten Wellenlänge ($\lambda3$), die (nahezu) gleich der größeren Wellenlänge ($\lambda2$) ist, mit einer durch Kalibrierung vorgegebenen Bezugssignalstärke (Rref) verglichen wird; und dass, wenn das Signal des Reflexionsgrads diesen vorgegebenen Wert unterschreitet [R($\lambda3$) < Rref], festgestellt wird, dass eine sehr dicke Oxidschicht, d.h. mit einer Dicke, die ein Maximum (e2) übersteigt, ausgebildet ist; und dass sonst festgestellt wird, dass es sich um eine sehr dünne Oxidschicht handelt, d.h. mit einer Dicke, die ein Minimum (e1) unterschreitet.

5. Verfahren nach Anspruch 1, **dadurch gekennzeichnet, dass** bei einer sehr dünnen Oxidschicht die Dicke (e) anhand einer Gleichung der nachfolgenden Art abgeschätzt wird:

$$e = a_0 + a_1.\ln(Sl_1),$$

wobei $a_0$ und $a_1$ Konstanten sind, oder der nachfolgenden Art:

$$e = a'_0 + a'_1.Sl_1 + a'_2.(Sl1)^2,$$

wobei $a'_0$, $a'_1$ und $a'_2$ Konstanten sind, und $SI_1$ ein normalisiertes Gefälle darstellt, das anhand der nachfolgenden Formel ermittelt wird:

$$Sl_1 = [R(\lambda a)-R(\lambda b)]/[R(\lambda a)+R(\lambda b)],$$

wobei der Reflexionsgrad bei zwei unterschiedlichen Wellenlängen $\lambda$a und $\lambda$b gemessen wird, die durch Experimente sorgfältig ausgewählt werden.

6. Verfahren nach einem der vorstehenden Ansprüche, **dadurch gekennzeichnet, dass** die Teperatur (T) der Oxidschicht im Wesentlichen gleichzeitig gemessen und ermittelt wird, wozu ein monochromatisches Pyrometrieverfahren bei einer Wellenlänge ($\lambda4$) verwendet wird, die so kurz wie möglich ist und (nahezu) gleich der kleineren Wellenlänge ($\lambda1$) ist, in Kombination mit einem der nachfolgenden Verfahren je nach dem Dickewert (e) der Oxidschicht:

- ist die Dicke (e) kleiner als ein unterer Dickewert (e3), wird der Emissionsgrad der Oxidschicht mit einer Gleichung der nachfolgenden Art abgeschätzt:

$$\varepsilon\lambda 4 = b_0 + b_1.e + b_2.e^2,$$

wobei $b_0$, $b_1$ und $b_2$ Konstanten sind;

- ist die Dicke (e) größer als ein unterer Dickewert ($e_3$), aber kleiner als ein oberer Dickewert ($e_4$ ; $e_3 < e_4$), wird der Emissionsgrad der Oxidschicht wiederum mit einer Gleichung der nachfolgenden Art abgeschätzt:

$$\varepsilon\lambda 4 = c_0 + C_1.e + C_2.e^2,$$

wobei $c_0$, $c_1$ und $c_2$ Konstanten sind;

- übersteigt die Dicke (e) den oberen Wert ($e_4$), wird der Emissionsgrad wie folgt abgeschätzt:

$$\varepsilon\lambda 4 = d_0,$$

wobei $d_0$ eine Konstante ist und die vorgenannten Dickegrenzwerte ($e_3$, $e_4$) derart ausgewählt sind, dass $e_3$ dem ersten Höchstwert des Emissionsgrads bei der Wellenlänge λ4 entspricht, und $e_4$ in etwa dem ersten Durchlauf über den Wert d0, der dem Maximum der Emissionskurve folgt ($e_4 > e_3$).

7. Verfahren nach einem der vorstehenden Ansprüche, **dadurch gekennzeichnet, dass** das Metallsubstrat ein sich bewegendes Stahlband ist, das einer geregelten Oxidation unterzogen wird, vorzugsweise in einem Heizofen, gefolgt durch eine Reduzierung der ausgebildeten Oxidschicht.

## Claims

1. A contactless, simultaneous and real-time method for measuring the thickness (e) and temperature (T) of a oxide layer deposited on a metal substrate, preferably a steel strip in motion intended for subsequent galvanizing treatment by hot dipping, using an installation comprising a light source (1) that forms, by means of first optical means (2), preferably a lens, a small light spot on the surface (3) of the substrate, a shutter (4) positioned between the light source and the substrate, second optical means (5), preferably a lens, that forms the image of the surface of said spot on the inlet slit (6) of an optical spectrometer (7), the light source (1) used having an essentially continuous spectrum extending at least from a lower wavelength ($\lambda_1$) to an upper wavelength ($\lambda_2$), the optical spectrometer (7) having an operational wavelength range ($\lambda_1$, $\lambda_2$) between 200 nm and 2500 nm and preferably between 450 nm and 1650 nm, comprising the following successive steps:

- in a first step, the shutter (4) is closed in the optical path and the intrinsic radiation spectrum of the coated substrate S1(λ) is measured, using said spectrometer (7) operating in the case at hand in pyrometer mode;
- in a second step, the shutter (4) is left open and the spectrum of the coated substrate S2(λ) is measured using said spectrometer (7), operating in the case at hand in pyrometer and reflection mode;
- the spectrum of the reflection factor R(λ) is determined, defined as the ratio of the radiation spectrum reflected on the coated substrate, S3(λ), by the incident radiation spectrum S0(λ) of the light source (1), where S3(λ) is in turn obtained by subtracting the spectrum S1(λ) from the spectrum S2(λ);
- the thickness (e) of said oxide layer is determined from the analysis of the spectrum of the reflection factor R as follows:

- if the spectrum of the reflection factor R(λ), in the operational range of the spectrometer, i.e., ($\lambda_1$, $\lambda_2$), has at least one detectable interference peak, whether a maximum or a minimum, the thickness of the oxide layer is deduced from the wavelength of these minimum ($\lambda_{1m}$, $\lambda_{2m}$, etc.) or maximum ($\lambda_{1M}$, $\lambda_{2M}$, etc.) peaks from the optical properties, preferably the complex refraction index, the oxide layer and the substrate, the thickness of the oxide layer being between two extreme values $e_1$ and $e_2$, $e_1$ depending on $\lambda_1$ and $e_2$ depending on the extinction coefficient of the formed oxide, $e_1$ and $e_2$ being determined *a priori* by calibration;
- if no peak is detectable in the aforementioned spectral interval ($\lambda_1$, $\lambda_2$), one deduces from this that the layer is either too thin, i.e., has a thickness <$e_1$, or is too thick, i.e., has a thickness >$e_2$, to have interference peaks appearing in the considered spectral interval, the attenuation of the illumination in the layer being such, when said layer is too thick, that no significant interference occurs, and the discrimination between the two cases is done based on the shape and intensity of the reflection factor signal R(λ);

- still in this scenario where the oxide layer is said to be very thick or very thin, the following additional processing is required:

for the very thin layer, the value of the thickness of the oxide layer is determined from the shape, preferably the slope, of the curve of the spectral reflection factor $R(\lambda)$;
for the very thick layer, no thickness value is obtained from the measurements of the spectral reflection factor;

- the temperature (T) is determined from $S1(\lambda)$ and the thickness (e).

2. The method according to Claim 1, **characterized in that**, if the spectrum of the reflection factor $R(\lambda)$, in the operational range of the spectrometer, i.e., $(\lambda 1, \lambda 2)$, has at least one detectable peak, the thickness (e) of the oxide layer is calculated by means of the following formula:

$$e = k. \, \lambda_e/4n$$

where k is the order of appearance of the peaks in the case of a gradual growth of the oxide layer (k=1: 1st minimum, k=2: 1st maximum; k=3: 2nd minimum, etc.), $\lambda_e$ is the wavelength of the considered peak and n is the refraction index.

3. The method according to Claim 2, **characterized in that**, when there are several extrema, the thickness (e) is the result of the calculation of the arithmetic mean of the thicknesses obtained using the aforementioned expression.

4. The method according to Claim 1, **characterized in that**, in the case where no peak is detectable in the aforementioned spectral interval $(\lambda 1, \lambda 2)$, the intensity of the reflection factor signal $[R(\lambda 3)]$, taken at a third given wavelength $(\lambda 3)$, equal or close to the upper wavelength $(\lambda 2)$, is compared to a preset reference intensity level obtained by calibration (Rref); **in that**, in the case where the reflection factor signal is smaller than said preset level $[R(\lambda e) <$ Rref], one can then see that a very thick oxide layer is formed, i.e., with a thickness greater than a maximum value (e2); and **in that** on the contrary, one can see that a very thin oxide layer is formed, i.e., with a thickness below a minimum value (e1).

5. The method according to Claim 1, **characterized in that**, in the case where the oxide layer is very thin, the thickness (e) is estimated by an equation of the type:

$$e = a_0 + a_1.\ln(SI_1),$$

where $a_0$ and $a_1$ are constants, or of the type:

$$e = a'_0 + a'_1.SI_1 + a'_2.(SI_1)^2,$$

where $a'_0$, $a'_1$ and $a'_2$ are constants, $SI_1$ designating a normalized slope obtained by the formula:

$$SI_1 = [R(\lambda_a)-R(\lambda_b)]/[R(\lambda_a)+R(\lambda_b)],$$

where the reflection factor is measured at two different wavelengths $\lambda_a$ and $\lambda_b$ carefully chosen through experimentation.

6. The method according to any one of the preceding claims, **characterized in that** the temperature (T) of the oxide layer is essentially simultaneously measured and determined by using the monochromatic pyrometry method, at a wavelength that is as short as possible $(\lambda_4)$, equal or close to the lower wavelength $(\lambda_1)$, in combination with one of the following methods, according to the thickness (e) value of the oxide layer:

- if the thickness (e) is less than a lower thickness value $(e_3)$, the emissivity of the oxide layer is estimated by an equation of the type:

$$\varepsilon_{\lambda 4} = b_0 + b_1.e + b_2.e^2,$$

where $b_0$, $b_1$ and $b_2$ are constants;
- if the thickness (e) is greater than said lower thickness value ($e_3$) but less than an upper thickness value ($e_4$; $e_3 < e_4$), the emissivity of the oxide layer is again estimated by an equation of the type:

$$\varepsilon_{\lambda 4} = c_0 + c_1.e + c_2.e^2,$$

where $c_0$, $c_1$ and $c_2$ are constants;
- if the thickness (e) is greater than said upper thickness value ($e_4$), the emissivity is estimated by:

$$\varepsilon_{\lambda 4} = d_0,$$

$d_0$ being a constant, and the aforementioned thickness bounds ($e_3$, $e_4$) being chosen so that $e_3$ corresponds to the first maximum of the emissivity of the wavelength $\lambda_4$ and $e_4$ approximately corresponds to the first passage by the value $d_0$ according to the maximum of the emissivity curve ($e_4 > e_3$).

7. The method according to any one of the preceding claims, **characterized in that** the metal substrate is a steel strip in motion undergoing controlled oxidation, preferably in a heating furnace, followed by a reduction of the formed layer of oxide.

Fig.1

EP 1 593 929 B1

R (λ)

≥ 1 pic — Faux

Vrai

$\lambda_{1m}, \lambda_{2m},...$ ou $\lambda_{1M}, \lambda_{2M},...$
$\rightarrow$ e

R (λ$_3$) < R $_{ref}$ — Faux

Vrai

e > e $_2$

Forme R (λ) $\rightarrow$ e

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 10206125 A
- JP 4013910 A
- JP 11325839 A
- JP 3293504 A

**Littérature non-brevet citée dans la description**

- **F.G. BOEBEL et al.** Real time, in situ measurement of film thickness with Reflexion Supported Pyrometric Interferometry (RSPI). *IEEE/SEMI Advanced Semiconducteur Manufacturing Conference,* 1994, 311-315